(19) **Europäisches Patentamt**
**European Patent Office**
**Office européen des brevets**

(11) **EP 4 404 545 A1**

(12) **EUROPEAN PATENT APPLICATION**

(43) Date of publication:
**24.07.2024 Bulletin 2024/30**

(21) Application number: **23305073.1**

(22) Date of filing: **20.01.2023**

(51) International Patent Classification (IPC):
**H04M 1/72454** (2021.01)    **H04M 1/66** (2006.01)
**H04M 3/38** (2006.01)

(52) Cooperative Patent Classification (CPC):
**H04M 1/72454;** H04M 1/66; H04M 3/38;
H04M 2203/2005; H04M 2250/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Skyted**
**31000 Toulouse (FR)**

(72) Inventor: **HERSEN, Stephane**
**31000 Toulouse (FR)**

(74) Representative: **Osha BWB**
**2, rue de la Paix**
**75002 Paris (FR)**

(54) **METHODS AND SYSTEMS FOR FACILITATING COMPLIANCE WITH VOICE CALL RESTRICTIONS FOR A DEFINED SPACE**

(57)    A system for facilitating compliance with voice call restrictions for a defined public space, such as train, waiting room, cabin of aircraft or taxi is provided. The system includes a communication device comprising a processor and configured to access a communications network associated with the defined space to transmit and receive audio data, a sound pressure level sensor configured to detect sound levels received by the communication device, wherein the processor is configured to determine a first sound pressure level associated with sound emanating from a user of the communication device, determine a second sound pressure level associated with ambient sound within the defined space, determine an adapted threshold value based on a predetermined threshold value and the second sound pressure level, compare the first sound pressure level to the adapted threshold value, and in response to determining that the second sound pressure level exceeds the adapted threshold value, executing a remedial action such as issuing notification to user, temporarily disabling the communication device, termination transmission or reception for the audio data.

**Fig. 2B**

**Description**

TECHNICAL FIELD OF THE INVENTION

The present disclosure relates to methods and systems for facilitating compliance with voice call restrictions for a defined space. Particularly, the present disclosure relates to conditional access to communication services and remediation of violations of communication restrictions (e.g., volume level).

BACKGROUND OF THE INVENTION

As a result of various factors in the marketplace, the ability to conduct online meetings from virtually any location has become desirable. Travel and mobility are an important aspect of conducting business, and business travelers are often located in enclosed space where other parties are present (e.g., airport waiting areas, airplane cabins, high-speed train cars, etc.)

Third parties present in the various spaces typically prefer to have a relatively calm and quiet environment and generally do not want to hear communications of others in the space, particularly when such communications are carried out with another party located remotely from the space (e.g., via telecommunications). Indeed, in some spaces (e.g., airplane cabins) telephonic communications are prohibited in order to reduce or prevent disagreements between passengers over noise levels, among other things.

US 10,714,119 describes a communication device and communication system for improving acoustic safety of a user by detecting acoustic safety incidents.

SUMMARY

The present inventor has recognized that there exists a desire to enable communications within defined spaces while enforcing noise thresholds enacted by owners of the spaces.

Therefore, a system for facilitating compliance with voice call restrictions for a defined space, is provided. The system includes a communication device comprising a processor and configured to access a communications network associated with the defined space to transmit and receive audio data, a sound pressure level sensor configured to detect sound levels received by the communication device. The processor is configured to determine a first sound pressure level associated with sound emanating from a user of the communication device based on input from the sound pressure level sensor, determine a second sound pressure level associated with ambient sound within the defined space, determine an adapted threshold value based on a predetermined threshold value and the second sound pressure level, compare the first sound pressure level to the adapted threshold value, and in response to determining that the first sound pressure level exceeds the adapted threshold value, executing a remedial action on the communication device.

By providing such a system it becomes possible to enable communications to be carried out in a defined space while maintaining a desired level of tranquility within the defined space. Using the ambient sound to determine an adapted sound pressure level and remediating (e.g., notifications to the user) of a restriction violation, the system may ensure that the restrictions are here to during communications within the defined space. This may be particularly useful, for example, where communications are otherwise up to this point in time prohibited (e.g., within an airplane cabin).

The remedial action may include one or more of issuing a notification to the user via the communication device, temporarily disabling the communication device, and terminating transmission and reception for the audio data.

The communication device may include an identifier linked to the communication device and an access code linked to the communications network and the identifier, and the remedial action may include changing or invalidating the access code to terminate access of the communication device to the communications network.

The communication device may include an image capture device configured to obtain information associated with the predetermined threshold value from one or more of a document, a bar code, and the access code.

The notification may include a timer indicating a length of time from a present time to when a further remedial action will be executed.

The processor may be configured to provide a real-time indication of the first sound pressure level relative to the adapted threshold value.

The defined space may be a cabin (e.g., a passenger cabin) of an aircraft.

The predetermined threshold value may be specific to an airline associated with the aircraft, and the predetermined threshold value may be obtained by the communication device via one or more of the communications network and a boarding pass.

The communication device may be configured to store metadata associated with the audio data, the metadata including the first sound pressure level.

The processor may be configured to obtain the access code and the predetermined threshold value from the communications network in encrypted format and to decrypt the access code and the predetermined threshold value.

According to further embodiments, a method for facilitating compliance with voice call restrictions for a defined space, is provided. The method includes providing conditional access to a communications network associated with the defined space, the communications network being configured to transmit and receive audio data, determining a first sound pressure level associated with sound emanating from a user of a communication device based on input from a sound pressure level sensor, determining a second sound pressure level associated with ambient sound within the defined space, determining an adapted threshold value based on a predetermined threshold value and the second sound pressure level, comparing the first sound pressure level to the adapted threshold value, and in response to determining that the first sound pressure level exceeds the adapted threshold value, executing a remedial action.

By providing such a method compliance with restrictions for communications within a defined space is facilitated. Using the ambient sound to determine an adapted sound pressure level and remediating (e.g., notifications to the user) of a restriction violation, the system may ensure that the restrictions are here to during communications within the defined space. This may be particularly useful, for example, where communications are otherwise up to this point in time prohibited (e.g., within an airplane cabin).

The remedial action may include one or more of issuing a notification to the user via the communication device, temporarily disabling the communication device, and terminating transmission and reception for the audio data.

The remedial action may include changing or invalidating an access code to terminate access to the communications network.

The method may further include obtaining information associated with the predetermined threshold value from one or more of a document, a bar code, and an access code provided for accessing the communications network.

The method may further include providing a real-time indication of the first sound pressure level relative to the adapted threshold value.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

## BRIEF DESCRIPTION OF DRAWINGS

Other advantages and features of the invention will become apparent on reading the description, illustrated by the following figures which represent:

FIG. 1 shows an illustrative defined space in which communications restrictions may apply according to embodiments of the present disclosure;

FIG. 2A shows a schematic representation of an illustrative communications device according to embodiments of the present disclosure;

FIG. 2B shows a schematic representation of the communications device of FIG. 2A in conjunctions with a voice attenuating device according to embodiments of the disclosure;

FIG. 3 is a flowchart highlighting a method for facilitating compliance with voice call restrictions for a defined space according to embodiments of the present disclosure;

FIG. 4A shows a representation of an illustrative situation in which restriction and connection information is obtained for a defined space;

FIG. 4B highlights an illustrative interface for verifying and pairing with communication facilities within a defined space;

FIG. 4C shows an illustrative interface for initiating communications following the verifying and pairing of FIG. 4B;

FIG. 4D shows a user contact list which may be provided for establishing a communication session within the defined space according to embodiments of the present disclosure; and

FIG. 5 shows a schematic of a computing portion of an illustrative communication device that may be implemented in accordance with one or more embodiments of the present disclosure.

## DETAILED DESCRIPTION

Embodiments of the present disclosure are directed to ensuring compliance with communication restrictions (e.g., sound levels) in a defined space. The systems and methods disclose herein implement a remediation system configured to ensure that voice sound pressure levels (SPLs) of a user remain below a given threshold and preventing further communications by the user where such levels cannot be maintained. The systems and methods provide additional assistance by attenuating voice audio exiting an optional voice attenuating device (e.g., a mask) and enabling a user to visualize a SPL associated with voice on the communication device. Thus, the systems and methods enable a user to not only to be warned and stopped from further communication where thresholds are not respected, but to visualize a level of spoken audio relative to the threshold to aid in compliance with the set restrictions.

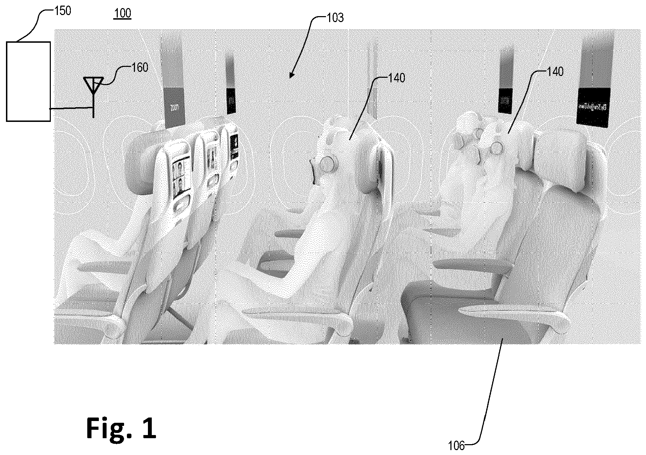

FIG. 1 shows an illustrative defined space 100 in which communications restrictions may apply according to embodiments of the present disclosure. The defined space 100 may be an enclosed area and may be publicly accessible by one or more people, referred to interchangeably herein as occupants, users, and passengers. For example, the defined space 100 may be a cabin 103 of an aircraft, an interior of a train, a waiting room, an interior of a bus, an interior of a taxicab, a public park, a theatre, etc.

Because the defined space 100 may be a public location a certain level of ambient noise may be present within the defined space 100. For example, within the cabin of an aircraft there is generally a persistent ambient sound generated by air currents over the exterior of the aircraft as well as sound generated by the aircraft's engines. Similarly, within the interior of a bus or train, the ambient sounds generated by the motion of the vehicle and occupants therein is generally at a persistent level. For purposes of the present disclosure, such sounds will be referred to as ambient sound.

For purposes of explaining the present systems and methods, the defined space 100 will be described as a cabin of an aircraft 103 in which a plurality of seats, spaced at defined distances, are provided for a plurality of passengers 140.

According to embodiments of the disclosure, the defined space 100 may be associated with a communications provider 150 (e.g., a communications network) configured to provide connectivity and communication capabilities to an occupant of the defined space 100. For example, in the cabin of an aircraft 103 a transceiver 160 may be linked with a communications provider 150 (e.g., satellite, ground based, hybrid, etc.) to provide connectivity to cellular telephony services including, for example, cellular and/or WiFi data (e.g., 3G, 4G, 5G, IEEE 802.11, etc.) According to some embodiments the communications provider 150 may provide a WiFi and/or Bluetooth network via the transceiver 160 within the defined space 100 enabling connection of the communication device 110 to the communications provider 150 therethrough.

Access to the communication provider 150 via the transceiver 160 is conditional and may be based on the communications device 110 being provisioned with an identifier and/or an access code compatible with the communications provider 150 of the defined space 100 and/or with the transceiver 160. For example, a passenger 140 in the aircraft cabin 103 may be provided access information including an access code and/or user credentials upon purchase of communication options or in conjunction with a boarding pass obtained for boarding the aircraft. Upon providing the obtained access information to the communications device 110, the communication device 110 may establish a connection with the communications provider 150.

According to some embodiments, the access information may be encrypted and transmitted from the communications provider 150 within the defined space 100 via the transceiver 160. For example, a passenger in the aircraft cabin 103 may establish an initial connection with the communications provider 150 using the communication device 110, and may be prompted to pay for communication services. Following payment for the desired services, the access information may be provided (e.g., transmitted and decrypted) to the communication device 110 and the desired level of communication services provided to the communication device 110.

According to some embodiments, restriction data regarding communications may be stored and transmitted by the communications network 150. For example, upon establishing a connection to the communications network 150, the communication device 110 may receive, from the communications network 150, restriction data including, for example, a predetermined threshold value for a sound level for voice audio. The restriction data may be stored by the communication device 110 during the time period which the communication device 110 is connected to the communications network 150. Alternatively, or in addition, the communication device 110 may request restriction data from the communications provider 150 on an as needed basis (e.g., when a communication session is started).

Restriction data may comprise restrictions for communications within a defined space 100, which may be established by an entity administering the defined space 100. For example, restrictions may relate to SPL of voice audio of a user participating in a communications session, a device SPL for audio being output during the session, a length of the communication session, etc. The entity administering the defined space 100 may therefore, wish to ensure that such restrictions are complied with and may tie the use of the communication services offered by the communications provider 150 within the defined space 100 to compliance with the set restrictions. For example, an airline operating commercial flights may regulate SPL of a user's voice within the cabin 103 of the aircraft and may forbid the voice volume to exceed a certain level (e.g., maximum voice SPL = ~30-40 percent in dB less than an ambient sound level) for greater than a predetermined period of time (e.g., 5 seconds). According to such an example, assume that an ambient sound level within a cabin of a commercial airliner is approximately 75 dB. In such a case, the maximum SPL of a user's voice within the cabin could be regulated to, for example, 50 dB. If the user's voice exceeds 50 dB + 5% for greater than 5 seconds, then remedial action could be taken.

The administering entity may further set desired remedial actions for users in violation of the set restrictions. For example, the administering entity may determine that communications should immediately be terminated, e.g., via disconnection of a communications device from the communications network 150 when the violation occurs. Alternatively, and as another example, an administering entity may dictate that a number of remedial steps be implemented (e.g., in ascending order of severity) prior to ultimately terminating a communications session. For example, a user may first be notified that they are in violation of one or more restrictions, followed by a warning indicating that the violation continues or that the user has exceeded a certain number of notifications (e.g., 2 notifications) a follow-on remedial step will be performed (e.g., reduction of output volume, etc.) Finally, in response to continued violation, a most severe remediation step may be taken, such as, for example, a communications session may be terminated, the communications device 110 may be temporarily disabled, etc., as described below.

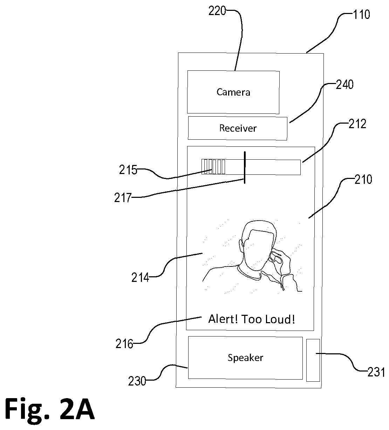

FIG. 2A shows a schematic representation of an illustrative communications device according to embodiments of the present disclosure. The communication device 110 is configured to perform functions associated with embodiments of the present disclosure and may comprise any suitable device for carrying out such functions. The communication device 110 may include, for example, a display 210, an image capture device 220 (e.g., a camera), an audio input device 231, an audio output device 230 (e.g., a loudspeaker), a receiver 240, etc.

The illustrated communication device 110 is intended to encompass any communication device such as a server, desktop computer, laptop/notebook computer, wireless data port, smart phone, personal data assistant (PDA), tablet communication device, one or more processors within these devices, or any other suitable processing device, including both physical or virtual instances (or both) of the communication device 110. Particularly, the communication device 110 includes hardware enabling a user 140 to conduct wireless communications using over the air signals to transmit and receive data (e.g., audio data) to and from one or more sources via, for example, the communications provider 150. In the context of the present disclosure, the term "communications" shall refer to any of placing and receiving telephone calls, online conferencing (e.g., video calls, Facetime, Zoom, MS Teams), virtual meetings, texting, and any other type of conveying information to a remotely located party. Because such communication devices are known in the art, an indepth description of all features of such devices will not be undertaken, however, certain additional components of the communication device 110 are described below.

The audio input device 231 may comprise any suitable sound sensor configured to receive various sounds, such as, for example, voice audio from the user, voice audio from a thirdparty, ambient sounds, etc. The audio input device 231 may correspond to a microphone installed in the communication device 110 and/or an external microphone connected to the communication device either via wired connection (e.g., USB, serial cable, etc.) or a wireless connection (e.g., Bluetooth, Wifi (e.g., IEEE 802.11), etc.). While the present disclosure discusses the audio input device 231 as a singular device, the communications device 110 may include a plurality of audio input devices 231. For example, a first microphone intended to be placed near a mouth of the user and a second microphone configured to receive a voice of the user at a distance as well as ambient sound surrounding the communication device 110.

The audio output device 230 may be any suitable device configured to provide audio output to the user 140. For example, the audio output device 230 may comprise a loudspeaker, a headphone jack, etc. The audio output device 230 may further be configured to provide an wireless signal representing the audio output to one or more wireless devices configured to convert and amplify the audio output (e.g., Bluetooth speakers, headphones, etc.) While the present disclosure discusses the audio output device 230 as a singular device, the communications device 110 may include a plurality of audio output devices 230. For example, a first speaker intended to be placed near the ear and a second speaker configured to amplify the sound such that a user may hold the phone away from the ear of the user.

The display 210 may comprise any suitable device for providing visual information to a user 140. For example, the display 210 may include an LED, an OLED, an LCD, or other suitable display type. The display 210 may be configured to act as an interface between the user 140 and the communication device 110 and may provide information to and receive information from the user 140. For example, the display may be configured to display text 216 (e.g., notifications to the user), video information 214 (e.g., for a video call), and a SPL indicator 212, providing feedback to the user 140 or other parties in and around the communication device 110, among other things. Such information will be discussed in greater detail below.

In addition, the display 210 may be configured as a touchscreen to receive input via touch from the user. For example, a capacitive touch LED or OLED screen may be implemented as display 210. The display 210 is not intended to be limited to a touchscreen type device, and input may be received via other input devices that are external to the communication device 110.

The text information 216 on the display 210 may be configured to provide various information to a user 140 operating the communication device 110 in the context of embodiments of the present disclosure. For example, the text information may be configured to provide a notification indicating that the user 140 is currently in violation of one or more restrictions associated with communications within the defined space 100. For example, when it is determined, as described below, that the sound pressure level of the user's voice exceeds a regulated volume level (e.g., 5 % greater in dB than a predetermined threshold), the text information 216 may provide a warning (e.g., a flashing phrase) that the user 140 needs to speak more quietly.

According to some embodiments, the text information 216 may include further information regarding a remedial action to be taken in the event that the user 140 does not adapt the voice to below the regulated level. For example, a timer and/or counter may be displayed to the user along with a notification that a next remedial action (e.g., termination of the communication session) established with the communications provider 150 will be executed at expiration of the displayed timer and/or upon the counter achieving a given violation count. The timer may continue to count down as long as the violation is ongoing while the counter may increment upon each recurrence of the violation, for example.

The SPL indicator 212 may be configured to provide real-time visual guidance to the user for increasing and decreasing a SPL of the voice audio based on the threshold set for a SPL restriction. For example, the SPL indicator 212 may indicate a current SPL of the user's voice audio via SPL meter 215 relative to an indicator 217 showing a maximum level for voice audio to remain below a threshold set in a restriction for the defined space 100.

The video information 214 may be configured to provide a user 140 with video information related to, for example, a video communication. For example, during a video conference conducted using the communication device 110, the video feed from the one or parties with whom the communication device 110 is connected may be displayed via video information 214. Other video information may also be displayed via video information 214, for example, notification, entertainment (e.g., films, tv shows, etc.)

The image capture device 220 may be configured to obtain one or more images related to the defined space 100 and/or restrictions associated therewith. For example, the image capture device 220 may comprise a camera (e.g., a front or rear camera of a cell phone) that may form part of the communication device 110. Alternatively, or in addition, the image capture device 220 may be an external camera configured to communicate, either by wire or wirelessly, with the communication device 110 to enable the communication device 110 to obtain an image of the surroundings of the user 140.

Images captured by the image capture device 220 may be used by the communication device to obtain information related to restrictions established for the defined space 100, and/or access information for the communication provider (e.g., access code), among other things. For example, a user 140 may scan a paper boarding pass for the aircraft cabin 103 to obtain initial connection information (e.g., network name, preliminary identifier, seat location) for the communications provider 150, as well as restriction data for the define space 100. Such information may be provided by, for example, a bar code or other suitable marking on the paper boarding pass. Alternatively, or in addition, the image capture device may be used to scan a seatback display or other informational display located at or near a seat within the defined space 100, the informational display providing the connection and/or restriction information to the computing device 110.

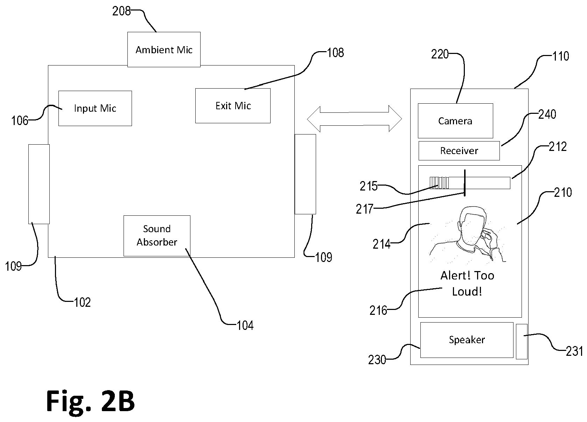

FIG. 2B shows a schematic representation of the communications device of FIG. 2A in conjunctions with a voice attenuating device according to embodiments of the disclosure. While the voice attenuating device 102 is optional, it may be useful for maintaining voice audio levels below a threshold set in a restriction for the defined space 100, among other things (e.g., shielding a user's mouth to prevent lip reading). The voice attenuating device 102, also referred to herein as a "mask," may be configured for wearing on the face of a user 140 and for connecting via a wired or wireless connection to the communication device 110. The voice attenuating device 102 may present a shape configured to conform with the face of a user 140 and may define an internal volume configured to surround the mouth of the user 140 without contacting the mouth of the user 140. For example, the voice attenuating device 102 may be cupped for domed such that an interior surface of the voice attenuating device 102 is positioned away from the mouth of the user 140, while edges of the voice attenuating device 102 may rest on the cheeks or other facial parts of the user 140.

The voice attenuating device 102 may be fabricated from any suitable material enabling comfort and form fit for the. For example, the mask may be fabricated from a meta material, a filter, a sound absorber, and/or any suitable sound absorbing textile.

The voice attenuating device 102 may include one or more features enabling the mask to be secured to the user 140. For example, the voice attenuating device 102 may include one or more straps configured to pass over the ears of the user 140 and configured to be tightened to hold the voice attenuating device 102 on the face of the user. According to another example, the mask 102 may be configured to attach in a removable manner with a headset 109, described below, for example via detachable clips (e.g., magnetic clips).

According to embodiments of the present disclosure, the voice attenuating device 102 includes a sound absorber 104 configured to reduce (i.e., attenuate) a sound pressure level (SPL) of voice audio. For example, the sound absorber 104 may be fabricated from a meta material, a filter, a sound absorber, and/or any suitable sound absorbing textile. A list of materials provided herein is intended as illustrative only and not as limiting, any known sound absorbing material may be implemented for purposes of attenuating voice audio within the voice attenuating device 102.

The sound absorber 104 may be positioned at any suitable location relative to the voice attenuating device 102. For example, the sound absorber 104 may be positioned within the interior volume of the voice attenuating device 102 and/or on an external portion of the voice attenuating device 102.

According to some embodiments the sound absorber 104 may be formed via one or more of an injection molding process, a three-dimensional printing process, or other suitable fabrication processes. For example, the sound absorber 104 may be fabricated using a 3-D printer using instructions for a particular voice attenuating device 102.

The sound absorber 104 and the voice attenuating device 102 may be fabricated as a unitary device. For example, the voice attenuating device 102 may be formed via a first molding process, while the sound absorber 104 is overmolded onto the voice attenuating device 102.

The sound absorber 104 may have any suitable geometry relative to the voice attenuating device 102 for purposes of attenuating voice audio spoken by the user 140 within the internal volume of the voice attenuating device 102. For example, the sound absorber 104 may cover an interior portion of the voice attenuating device 102 entirely. According to another example, the voice attenuating device may be formed entirely from the sound absorber. In yet another example, a plurality of pieces of sound absorber 104 may be adhered to the internal volume of the voice attenuating device 102 at certain locations with the intention of maximizing the sound attenuating effects of the sound absorber 104.

The voice attenuating device 102 and sound absorber 104 may be configured to redirect air and therefore, sound energy from a front portion of the voice attenuating device 102 to a rear, exit zone of the voice attenuating device 102. For example, the interior volume of the voice attenuating device 102 may include channels and/or flow paths (not shown) configured to redirect air and therefore sound waves through the voice attenuating device 102 to an exit zone.

The voice attenuating device 102 may include an audio input device 106 configured as a sound sensor to receive voice audio from the user 140. For example, the audio input device 106 may be positioned within the internal volume of the voice attenuating device 102 at a position configured to maximize captured voice audio from the user 140. According to such an example, the audio input device 106 may be adhered to a wall defining the internal volume of the voice attenuating device at a position directly in front of the mouth of the user when the voice attenuating device 102 is in a worn position on the user 140. When referring to the "worn position" of the voice attenuating device 102 it is intended to refer to the voice attenuating device positioned such that the internal volume of the voice attenuating device 102 covers the mouth of the user 140, as shown at FIG. 1. In other words, the voice attenuating device 102 may be held temporarily in the worn position and/or fixed in the worn position (e.g., via straps) for longer periods.

The audio input device 106 may comprise any suitable device(s) for capturing voice audio from the user 140 and transmitting an electrical representation of the captured voice audio to the communication device 110. For example, the audio input device 106 may comprise one or more audio microphones having a frequency response, sensitivity, and capture pattern desirable for voice audio within an enclosed space (e.g., the internal volume of the voice attenuating device 102).

According to further embodiments, the audio input device 106 may comprise a bone conduction microphone configured to capture sound waves from bones of a user, e.g., a user's jaw and/or ear structure. According to such an embodiment two or more audio input devices 106 may be implemented one on each side of the user's face 103, e.g., at a position where the voice attenuating device 102 meets the headset 109 show at FIG. 1. The types and configurations of any implemented audio input device(s) are intended as illustrative and not limiting. Any suitable audio input device 106 may be used without departing from the scope of the present disclosure.

The audio input device(s) 106 may be configured to transmit signals representing the captured sounds (e.g., voice audio) via any suitable transmission method. For example, the audio input device 106 may be configured to wirelessly transmit the captured voice audio to the communication device 110 using any suitable wireless transmission protocol (e.g., Bluetooth, IEEE 802.11, 3G/4G/5G, etc.) Alternatively, or in addition, the audio input device 106 may include a wired connection to a transmitter (not shown) installed in or on the voice attenuating device 102. The transmitter may be configured to transmit the captured sound signals to the communication device 110.

The voice attenuating device 102 includes another audio input device 108 associated with an external portion of the voice attenuating device 102 and configured as a sound sensor to receive at least attenuated voice audio exiting the voice attenuating device 102. The audio input device 108 may be any suitable device for capturing sound attenuated by the voice attenuating device 102 and/or sound absorber 104. For example, the audio input device 108 may comprise a microphone having a frequency response, sensitivity, and capture pattern desirable for capturing attenuated voice audio exiting the voice attenuating device 102 at an exit zone.

The audio input device 108 may be positioned at an exterior (i.e., outside of the interior volume) and on an edge portion of the voice attenuating device 102 near the exit zone. For example, the audio input device 108 may be positioned on the voice attenuating device 102 and near an ear of the user 140 when the voice attenuating device 102 is in the worn position. This may enable the audio input device 108 to obtain a more accurate measurement of a SPL of attenuated voice audio exiting the voice attenuating device 102.

According to some embodiments, two or more audio input devices 108 may be provided on an exterior of the voice attenuating device 102 to permit more accurate determination of SPLs of attenuated voice audio exiting the voice attenuating device 102. For example, an audio input device 108 may be positioned on each side of the face of the user 140 at the exit zone of the voice attenuating device 102.

The audio input device(s) 108 may be configured to transmit signals representing the captured sounds (e.g., attenuated voice audio) via any suitable transmission method. For example, an audio input device 108 may be configured to wirelessly transmit the captured audio to the communication device 110 using any suitable wireless transmission protocol (e.g., Bluetooth, WiFi (e.g., IEEE 802.11), 3G/4G/5G, etc.) Alternatively, or in addition, the second sound sensor 108 may include a wired connection to a transmitter (not shown) installed in or on the voice attenuating device 102. The transmitter may be configured to transmit the captured sound signals to the communication device 110.

The receiver 240 of the communication device 110 is configured to receive audio data from the sound sensor 106 and the second sound sensor 108, among other things. For example, the receiver 240 may include one or more of Bluetooth, WiFi (e.g., IEEE 802.11), cellular, etc., receivers configured to wirelessly receive an electronic signal representing audio data (e.g., voice audio and attenuated voice audio) from the audio input devices 106 and 108, among other sensors (e.g., an ambient sound sensor). The receiver 240 may be configured to provide the signal to a processor 516 of the communication device 110 via any suitable means, e.g., via a system bus 503 of the communication device 110.

According to embodiments where the optional voice attenuating device is implemented, the text information 216 may also be configured to provide a visual reproduction of words received by the communication device 110 via a voice audio spoken by the user 140, captured by the sound sensor 106. For example, the communication device 110 may include voice recognition software trained for the user 140 such that words spoken by the user may be "recognized" (i.e., speech recognition) and displayed via the text information 216 on the display 210 upon receiving a selection from the user indicating a desire to display the text. This feature may be helpful when the user 140 is wearing the voice attenuating device 102 on the face, thereby attenuating voice audio, but would like to speak with someone nearby (e.g., a taxi driver, a flight attendant, etc.)

Based on the voice audio obtained by the communication device 110, it is possible to determine whether the volume level of the user's voice remains below a threshold limit set for the defined space 100 in view of ambient sounds. Further, where the mask 102 is implemented, an attenuated sound pressure level (SPL) of the voice audio signal captured by the second sound sensor 108 may be obtained, thereby facilitating compliance with restrictions within the defined space.

According to embodiments of the disclosure, features of the system 100 are also configured to obtain information enabling determination of ambient SPLs surrounding the user 140 and the voice attenuating device 102. For example, the second sound sensor 108 may receive sound information from the surroundings and provide the information to the communication device 110 via the wired/wireless connection provided for the second sound sensor 108. Alternatively, or in addition, an ambient sound sensor 208 may be provided on the voice attenuating device 102 and configured to obtain ambient sound information. The ambient sound sensor 208 may be similar and provide similar functionality (e.g., wireless signal transmission, etc.) to the sound sensor(s) 106 and second sound sensors 108.

The headset 109 may be configured to be worn on and/or in the ears of the user 140 and to provide audio information to the user 140. For example, the headset 109 may comprise one or more sound transducers (e.g., speakers) configured to deliver sound to the ears of the user 140. The headset 109 may receive signals related to the sound information via a wired and/or wireless connection (e.g., to the communication device 110). Wireless connectivity of the headset 109 may be achieved similarly to the sound sensors 106 and 108, and amplification provided via known techniques.

The headset 109 may be any suitable device for providing sound information to the user 140. For example, the headset 109 may include in-ear, over-ear, on-ear, headphones or any other suitable configuration for conveying sound to the user 140.

The sound sensor 106, sound sensor 108, and headset 109, may each be configured for "pairing" with the communication device 110. For example, where a Bluetooth connection between the communication device and the sound sensors 106 and 108, and/or the headset 109 is implemented, pairing may be performed via known techniques in the art. The pairing may automatically cause the communication device 110 to begin performing operations according to the present disclosure.

Embodiments of the present disclosure implement a concept of using ambient sound when determining an adapted threshold SPL for spoken voice audio to remain in compliance with restrictions within the defined space 100. The user 140 may be provided with feedback enabling the user to adjust SPL of voice audio so as not to exceed the regulated adapted threshold volume, and if the user does not comply with the restrictions, communication device 110 and/or the communications provider 150 are configured to execute remedial actions (e.g., communication termination), as detailed below.

Based on the above, a formula for calculating the SPL(d2) at a distance d2, e.g., a location of a third party, with a known SPL(d1) at a distance d1, i.e., at the exist of the voice attenuating device 102 is expressed at equation (1.

$$L(d2) = L(d1) - 20\log(d2/d1) \qquad (1$$

The inverse of formula (1, which enables calculation of an initial sound level L(d1) at a distance d1 when we know the sound level L(d2) at a distance d2, is shown at equation (2.

$$L(d1) = L(d2) + 20\log(d2/d1) \qquad (2$$

The formula for calculating the distance d2 with a known SPL(d1) at the distance d1, and a SPL(d2) at the distance d2 is shown at equation (3.

$$10^{\wedge}((L(d1)-L(d2)+20\log(d1))/20 \qquad (3$$

The following example is provided for aiding in understanding the described calculations. Assuming a user's voice at 20 cm (i.e., within the personal space of the user) is 80 dB, we can estimate the SPL of the voice at 3 meters as follows:

$$L(3) = 80 - 20\log(3/0.2)$$

$$L(3) = 56{,}5 \text{ dB}$$

Next, the distance at which the user's voice will reach 50dB when the user continues to speak at 80dB at 0.2m can be determined.

$$d2 = 10^{\wedge}((80-50+20\log(0.2))/20$$

$$d2 = 6.32 \text{ m}$$

Thus, the user's voice will then have reached 50dB at 6.32m.

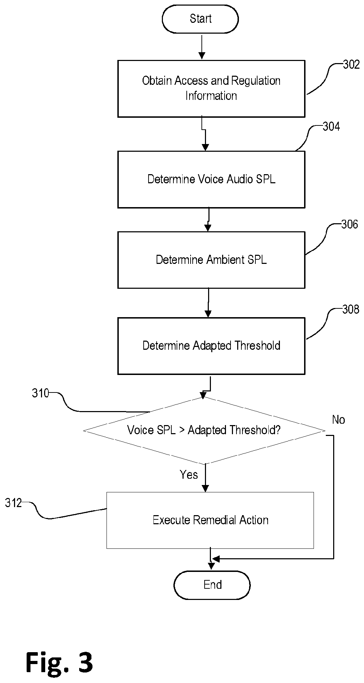

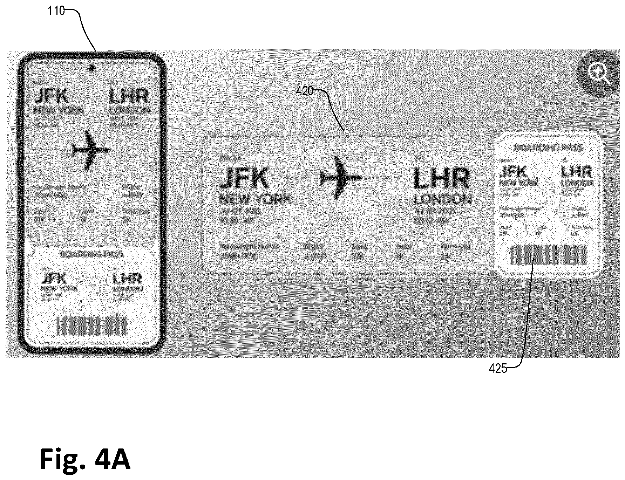

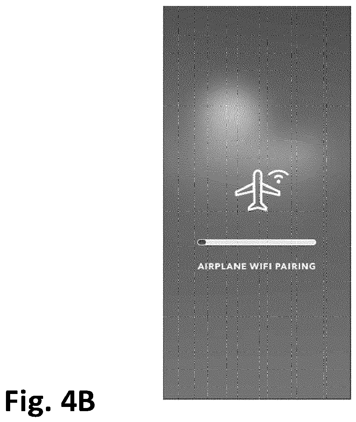

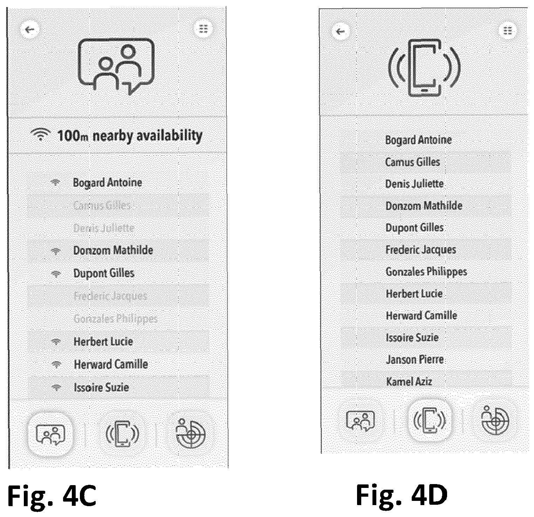

According to implementations of the present disclosure, each defined space 100 may have a particular set of restrictions set by a governing entity (e.g., owner of the defined space 100). For example, such restrictions may be provided in a general conditions of use (GCU) provided to a user of the defined space, and may relate to a set limit for, for example, an adapted threshold SPL. Based on a limit set in an illustrative GCU, the system may perform operations intended to maintain compliance with the limit, as the following example, taken in the context of Figs. 3 and 4 illustrates.

FIG. 3 is a flowchart highlighting a method for facilitating compliance with voice call restrictions for a defined space according to embodiments of the present disclosure, while FIG. 4A shows an illustrative representation of a hypothetical situation in which restriction and connection information is obtained for a defined space. FIGs. 4B-D highlight illustrative interfaces for verifying and pairing with communication facilities within a defined space and initiating communications following the verifying and pairing. These figures will be referred to in the following description.

Turning to FIG. 3, the communication device 110 may obtain access and restriction data related to the defined space 100 (step 302). For example, the communication device 110 may obtain restriction data from the communications provider 150 upon initial connection to the communication provider 150 (e.g., upon connecting to the SSID of the network in the defined space 100).

According to some embodiments the communication device 110 may further be allocated, for example, a certificate, a token, or other authorization "key" enabling the communication device 110 to pair or otherwise communicate with the communications provider 150. Such an allocation, also known as "provisioning," may take place, for example, upon a user purchasing communication services, upon scanning of a boarding pass, upon connection to the communication provider 150 within the defined space 100, etc.

FIG. 4A shows a representation of an illustrative situation in which restriction and connection information is obtained for the defined space 100. According to the example of FIG. 4A the image capture device 220 may be used to scan or otherwise capture an image of a boarding pass 420, ticket, or other document provided to the user for entering the defined space 100. For example, a bar code 425 may be provided on a paper boarding pass 420, the bar code 425 containing various information related to the user's position within the defined space 100 as well as restriction and access information for the communications provider 150. According to some embodiments, the bar code 425 may include an encoded version of an identifier and/or access code corresponding to a certificate or token for use by the communication device 110 for connecting to the communications provider 150 and for performing communications.

Alternatively, or in addition, a user 140 may provide user credentials to the communications provider 150 via the communication device 110, and those credentials verified. For example, a username and password may be provided to the user 140 upon purchase of communications access and the user may supply the username and password to the communications provider 150 upon initial connection. The communications provider 150 may then validate the credentials and send an access code to the communication device 110 for accessing the services purchased.

According to further embodiments, the initial connection information may be obtained by the communications device 110 via image capture with restriction data and access code provided following verification of the user 140 by the communications provider 150. FIG. 4B highlights an illustrative interface for verifying and pairing with communication facilities (e.g., communications provider 150) within the defined space 100. As shown, the communication device 110 may indicate to the user 140 status of the connection and/or pairing to the communications provider 150. During the connection/pairing, the restriction data and access code may be provided to the communication device 110. One of skill will recognize that the connection techniques described herein are not intended as limiting, and any method for connecting, accessing, and authenticating with the communications provider 150 may be implemented.

Once a connection to the communications provider 150 has been established and the access code and restriction data has been provisioned to the communication device 110, the user may be presented with one or more of illustrative interfaces shown at FIGs. 4C and 4D. As shown at FIG. 4C, a user may be presented with a selection among a number of other users 140 located within the defined space 100 and who have an active connection to the communications provider 150. The user 140 may select one or more of the users 140 listed for initiating a communication session.

As shown at FIG. 4D a list of the user's contacts may also be provided for establishing a communication session. The user may select one or more contacts from among the list to initiate a communication, for example, via Zoom ™, Facetime ™, Microsoft Teams ™, a normal telephone call etc. The interfaces shown with regard to initiation of a communications session on communications provider 150 are intended as illustrative only and are not to be considered limiting. For example, a dialing interface may be provided to the user to enable the user to dial a telephone number in a known manner via the communication device 110. According to some embodiments, the list may show only those contacts identified within range of the communication device 110 within the defined space. Alternatively, the list may show all of the user's contacts or a subset as defined by the user, for example.

Once the communication device 110 has established a communication session with the desired contacts via the communications provider 150, the user 140 may begin to speak such that one or more of sound sensors 231, 106, and 108 receive voice audio from the user 140. The voice audio spoken and obtained by the sound sensor 106 may be received by the communication device as a voice audio signal and the SPL of the signal determined by the communications device 110 (step 304). For example, when the user is wearing the optional voice attenuating device 102, the sound sensor 106 may provide the voice audio to the computer via a wireless connection (e.g., Bluetooth). The voice audio received at sound sensor 108 may receive attenuated voice audio, and the SPL of the attenuated audio implemented for further processing as noted below.

The communication device 110 may then determine ambient sound surrounding the user 140 for purposes of obtaining a SPL of the ambient sound (step 306). For example, the sound sensor 231 may obtain a sound signal corresponding to ambient sound in the vicinity of the communication device 110 and this signal used to determine a SPL of the ambient sound. Alternatively, or in addition, any other suitable sound sensor (e.g., second sound sensor 108) may provide an ambient sound signal to the communication device 110 to enable the communication device 110 to determine a SPL associated with the ambient sound.

Based on the ambient SPL obtained at step 306 and a predetermined threshold associated with the restriction data associated with the defined space 100, the communication device 110 may determine adapted threshold value for levels from the user 140 (step 308). This determination may be made as follows assuming a GCU restriction set as 65dB SPL at 0.7 meters, and using the equations above.

$$L(d1) = GCU\text{-}Level\text{-}Obligation + 20log(GCU \ Distance \ Obligation/d1)$$

$$L(d1) = 65dB + 20log(0,7m/d1)$$

Taking the distance d1, corresponding to the distance at which voice audio from a user is measured by the computing device or at the exit of an optional sound attenuating device, as equal to 1 cm,

$$L(d1) = 65 + 20log(0,7/0.10) = \sim82dB$$

Therefore, the SPL coming from the mouth of the user should not exceed 82dB.

According to some embodiments, the adapted threshold may be continuously adapted, e.g., in real time, based on the ambient SPLs surrounding the user. For example, when an aircraft begins a descent phase, the engines are typically throttled back and ambient sound within the aircraft cabin 103 may be reduced. During such time, the adapted threshold may also be changed to account for the reduction in ambient sound. Similarly, where a SPL of the ambient sound increases (e.g., aircraft engines throttling up), the adapted threshold may be changed to account for the increase in ambient sound.

The determined voice audio SPL may then be compared to the adapted threshold value to determine whether the voice audio SPL is exceeding the adapted threshold (step 310). When the voice audio SPL remains below or equal to the adapted threshold (step 310: no), no further action is taken. For example, where the voice audio SPL from the example above is 82 dB and the adapted threshold is 75 dB (e.g., based on the ambient SPL of 75dB within a cabin of an aircraft operating at cruising altitude), no remedial action is undertaken, because the SPL at 0.7m falls below the ambient SPL.

According to some embodiments a GCU may set restrictions based on a location within the defined space. For example, in an aircraft, first class may have a higher threshold set than in economy class, while business class may have a threshold set in between first and economy classes. As discussed herein, such information may be obtained by the communication device via, for example, scanning of barcode, e.g., on a boarding pass or seat tag, from a network connection in a particular location within the defined space 100, etc.

When it is determined that the voice audio SPL exceeds the adapted threshold SPL (step 310: yes), the communication device 110 executes a remedial action (step 312). Such remedial actions may be taken stepwise, from least severe, e.g., a visual and/or audible warning to the user, to most severe, e.g., deactivation of the access code provisioned to the communication device 110 for the duration of the time in the defined space 100. For example, an audible notification may be provided to the user 140 via the headset 109 and/or via the speaker 230 of communication device 110 the notification indicating that the voice audio SPL must be reduced within a time limit (e.g., the next 5 seconds) or a subsequent remedial action (e.g., reduction of audio level from the communication device 110) will be executed. A list of remedial actions that may be executed may be provided to the user 140 in advance, for example, in a terms of service document agreed to upon connection and validation with the communications provider 150.

When the voice audio SPL remains above the limit for a predetermined period of time and the most severe remedial action is reached, the communication session may be terminated by the communication device 110 and/or the communications provider 150. For example, the communications provider 150 may invalidate the access code provided to the communication device 110, thereby terminating a connection with the communications provider 150. Alternatively, or in addition, the communication device 110 may terminate a connection with the communications provider 150, thereby terminating the communication session.

The communication device 110 may provide a notification to the user 140 via text or other suitable method (e.g., flashing lights, etc.) to indicate the communication session was terminated. For example, a message may be displayed in via the text display 216 explaining the loss of connectivity.

According to some embodiments, when communications are about to be terminated for failure to adhere to the restrictions, the third-parties in communication with the user 140 may be notified of the impending disconnection. For example, when a user is conducting a virtual meeting with participants on the communication device 110, the communication device may cause a warning (e.g., a flashing notification) to be broadcast to the other devices participating in the virtual meeting indicating the user 104 will be disconnected within a predetermined period of time if voice audio is not reduced. Thus, the other participants may understand why communication with the user is terminated prior to the termination.

According to some embodiments, the entity charged with administering the defined space 100 may determine that a single remedial action of a desired severity should be implemented upon violation of the restrictions for the defined space. For example, instead of providing one or more notifications when it is determined that the voice audio SPL exceeds the adapted threshold, the communication device 110 may be immediately disabled and/or communication terminated via invalidation of a provisioned access code. The list of remedial actions is not intended as limiting and any remedial action for enforcing a restriction is intended to fall within the scope of the present disclosure. For example, where the restriction is a call time limit, the call may be terminated at expiration of the time limit, but the communication device 110 may still maintain connectivity with communications provider 150.

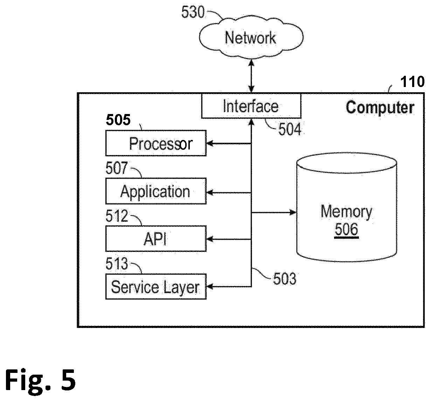

FIG. 5 shows a schematic of a computing portion of an illustrative communication device that may be implemented in accordance with one or more embodiments of the present disclosure. Specifically, FIG. 5 shows a block diagram of components of a communication device 110 used to provide computational functionalities associated with described algorithms, methods, functions, processes, flows, and procedures as described in the instant disclosure, according to an implementation.

The communication device 110 may include a computer that includes an input device, such as a keypad, keyboard, touch screen, or other device that can accept user information, and an output device that conveys information associated with the operation of the communication device 110, including digital data, visual, or audio information 104, 106 (or a combination of information), or a GUI.

The communication device 110 can serve in a role as a client, network component, a server, a database or other persistency, or any other component (or a combination of roles) of a computer system for performing the subject matter described in the instant disclosure. The illustrated communication device 110 is communicably coupled with a network 530. In some implementations, one or more components of the communication device 110 may be configured to operate within environments, including cloud-computing-based, local, global, or other environment (or a combination of environments).

At a high level, the communication device 110 is an electronic communication device operable to receive, transmit, process, store, or manage data and information associated with the described subject matter. According to some implementations, the communication device 110 may also include or be communicably coupled with an application server, e-mail server, web server, caching server, streaming data server, business intelligence (BI) server, or other server (or a combination of servers).

The communication device 110 can receive requests over network 530 from a client application (e.g., executing on another communication device 110) and responding to the received requests by processing the said requests in an appropriate software application. In addition, requests may also be sent to the communication device 110 from locally positioned users 140 (e.g., from a command console or by other appropriate access method), external or third-parties, other automated applications, as well as any other appropriate entities, individuals, systems, or computers.

Each of the components of the communication device 110 can communicate using a system bus 503. In some implementations, any or all of the components of the communication device 110, both hardware or software (or a combination of hardware and software), may interface with each other or the interface 504 (or a combination of both) over the system bus 503 using an application programming interface (API) 512 or a service layer 513 (or a combination of the API 512 and service layer 513.

The API 512 may include specifications for routines, data structures, and object classes. The API 512 may be either computer-language independent or dependent and refer to a complete interface, a single function, or even a set of APIs. The service layer 513 provides software services to the communication device 110 or other components (whether or not illustrated) that are communicably coupled to the communication device 110.

The functionality of the communication device 110 may be accessible for all service consumers using this service layer. Software services, such as those provided by the service layer 513, provide reusable, defined business functionalities through a defined interface. For example, the interface may be software written in JAVA, C++, or other suitable language providing data in extensible markup language (XML) format or other suitable format.

While illustrated as an integrated component of the communication device 110, alternative implementations may illustrate the API 512 or the service layer 513 as stand-alone components in relation to other components of the communication device 110 or other components (whether or not illustrated) that are communicably coupled to the communication device 110. Moreover, any or all parts of the API 512 or the service layer 513 may be implemented as child or sub-modules of another software module, enterprise application, or hardware module without departing from the scope of this disclosure.

The communication device 110 includes an interface 504. Although illustrated as a single interface 504 in FIG. 5, two or more interfaces 504 may be used according to particular needs, desires, or particular implementations of the communication device 110. The interface 504 is used by the communication device 110 for communicating with other systems in a distributed environment that are connected to the network 530.

Generally, the interface 504 includes logic encoded in software or hardware (or a combination of software and hardware) and operable to communicate with the network 530. More specifically, the interface 504 may include software supporting one or more communication protocols associated with communications such that the network 530 or interface's hardware is operable to communicate physical signals within and outside of the illustrated communication device 110.

The communication device 110 includes at least one computer processor 505. Although illustrated as a single computer processor 505 in FIG. 5, two or more processors may be used according to particular needs, desires, or particular implementations of the communication device 110. Generally, the computer processor 505 executes instructions and manipulates data to perform the operations of the communication device 110 and any algorithms, methods, functions, processes, flows, and procedures as described in the instant disclosure.

The communication device 110 also includes a non-transitory communication device 110 readable medium, or a memory 506, that holds data for the communication device 110 or other components (or a combination of both) that can be connected to the network 530. For example, memory 506 can be a database storing data consistent with this disclosure. Although illustrated as a single memory 506 in FIG. 5, two or more memories may be used according to particular needs, desires, or particular implementations of the computer 110 and the described functionality. While memory 506 is illustrated as an integral component of the computer 110, in alternative implementations, memory 506 can be external to the computer 110.

According to embodiments of the present disclosure, the memory 506 may be configured to store meta-data associated with communications carried out with the communication device 110 via the communications provider 150.

For example, meta-data may include sound pressure levels associated with the voice audio during communications within the defined space 100. Such meta-data may be used to determine and prove whether a user 140 did violate the restrictions set forth in the restriction data should a dispute arise following execution of remedial actions. Meta-data stored by the communication device 110 in the memory 506 may further include a length of each communication session, a quality of service, etc.

The application 507 may be an algorithmic software engine providing functionality according to particular needs, desires, or particular implementations of the computer 110, particularly with respect to functionality described in this disclosure. For example, application 507 can serve as one or more components, modules, applications, etc. Further, although illustrated as a single application 507, the application 507 may be implemented as multiple applications 507 on the computer 110. In addition, although illustrated as integral to the computer 110, in alternative implementations, the application 507 can be external to the computer 110.

There may be any number of communication devices 110 associated with, or external to, a network on which communication device 110 is operating, each computer 110 communicating over network 530, for example, to carry out a virtual meeting. Further, the term "client," "user," and other appropriate terminology may be used interchangeably as appropriate without departing from the scope of this disclosure. Moreover, this disclosure contemplates that many users may use one computer 110, or that one user may use multiple computers 110.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

It is intended that the specification and examples be considered as illustrative only, with a true scope of the disclosure being indicated by the following claims.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

## Claims

1. A system for facilitating compliance with voice call restrictions for a defined space, the system comprising:

   a communication device comprising a processor and configured to access a communications network associated with the defined space to transmit and receive audio data;
   a sound pressure level sensor configured to detect sound levels received by the communication device, wherein the processor is configured to:

   determine a first sound pressure level associated with sound emanating from a user of the communication device based on input from the sound pressure level sensor;
   determine a second sound pressure level associated with ambient sound within the defined space;
   determine an adapted threshold value based on a predetermined threshold value and the second sound pressure level;
   compare the first sound pressure level to the adapted threshold value; and
   in response to determining that the first sound pressure level exceeds the adapted threshold value, executing a remedial action on the communication device.

2. The system according to claim 1, wherein the remedial action comprises one or more of issuing a notification to the user via the communication device, temporarily disabling the communication device, and terminating transmission and reception for the audio data.

3. The system according to any of claims 1-2, wherein the communication device comprises an identifier linked to the communication device and an access code linked to the communications network and the identifier, and wherein the remedial action comprises changing or invalidating the access code to terminate access of the communication device to the communications network.

4. The system according to claim 3, wherein the communication device comprises an image capture device configured to obtain information associated with the predetermined threshold value from one or more of a document, a bar code, and the access code.

5. The system according to any of claims 2-4, wherein the notification comprises a timer indicating a length of time from a present time to when a further remedial action will be executed.

6. The system according to any of claim 1-5, wherein the processor is configured to provide a real-time indication of the first sound pressure level relative to the adapted threshold value.

7. The system according to any of claims 1-6, wherein the defined space is a cabin of an aircraft.

8. The system according to claim 7, wherein the predetermined threshold value is specific to an airline associated with the aircraft, and wherein the predetermined threshold value is obtained by the communication device via one or more of the communications network and a boarding pass.

9. The system according to any of claims 1-8, wherein the communication device is configured to store metadata associated with the audio data, the metadata including the first sound pressure level.

10. The system according to any of claims 3-9, wherein the processor is configured to obtain the access code and the predetermined threshold value from the communications network in encrypted format and to decrypt the access code and the predetermined threshold value.

11. A method for facilitating compliance with voice call restrictions for a defined space, the method comprising:

providing conditional access to a communications network associated with the defined space, the communications network being configured to transmit and receive audio data;
determining a first sound pressure level associated with sound emanating from a user of a communication device based on input from a sound pressure level sensor;
determining a second sound pressure level associated with ambient sound within the defined space;
determining an adapted threshold value based on a predetermined threshold value and the second sound pressure level;
comparing the first sound pressure level to the adapted threshold value; and
in response to determining that the first sound pressure level exceeds the adapted threshold value, executing a remedial action.

12. The method according to claim 11, wherein the remedial action comprises one or more of issuing a notification to the user via the communication device, temporarily disabling the communication device, and terminating transmission and reception for the audio data.

13. The method according to any of claims 11-12, wherein the remedial action comprises changing or invalidating an access code to terminate access to the communications network.

14. The method according to any of claims 11-13, further comprising obtaining information associated with the predetermined threshold value from one or more of a document, a bar code, and an access code provided for accessing the communications network.

15. The method according to any of claims 11-14, further comprising, providing a real-time indication of the first sound pressure level relative to the adapted threshold value.

Fig. 1

**Fig. 2A**

**Fig. 2B**

```
                          ┌──────────┐
                          │  Start   │
                          └────┬─────┘
                               │
                               ▼
               ┌────────────────────────────┐
               │ Obtain Access and Regulation│──── 302
               │        Information          │
               └──────────────┬─────────────┘
                              │
                              ▼
               ┌────────────────────────────┐
               │  Determine Voice Audio SPL  │──── 304
               └──────────────┬─────────────┘
                              │
                              ▼
               ┌────────────────────────────┐
               │    Determine Ambient SPL    │──── 306
               └──────────────┬─────────────┘
                              │
                              ▼
               ┌────────────────────────────┐
               │  Determine Adapted Threshold│──── 308
               └──────────────┬─────────────┘
                              │
         310 ──             ◇─┴──◇
                      ◇                 ◇
                 ◇  Voice SPL > Adapted Threshold?  ◇ ──── No
                      ◇                 ◇
                           ◇─┬──◇
                             │ Yes
                             ▼
           312 ──  ┌────────────────────────────┐
                   │   Execute Remedial Action   │
                   └──────────────┬─────────────┘
                                  │
                                  ▼
                             ┌──────────┐
                             │   End    │
                             └──────────┘
```

**Fig. 3**

**Fig. 4A**

Fig. 4B

**Fig. 4C**

**Fig. 4D**

# Fig. 5

**505**

507 — Processor

512 — Application

513 — API

Service Layer

503

504 — Interface

Memory
**506**

Network

530

Computer

110

Europäisches
Patentamt
European
Patent Office
Office européen
des brevets

# EUROPEAN SEARCH REPORT

Application Number

EP 23 30 5073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/144260 A1 (SONY MOBILE COMMUNICATIONS INC [JP] ET AL.) 1 August 2019 (2019-08-01) * abstract * * figures 1-3,6 * * paragraph [0005] – paragraph [0010] * * paragraph [0029] – paragraph [0032] * * paragraph [0035] – paragraph [0041] * * paragraph [0043] – paragraph [0064] * ----- | 1-15 | INV. H04M1/72454 ADD. H04M1/66 H04M3/38 |
| A | US 2021/203295 A1 (MAHADEVA SWAROOP [IN] ET AL) 1 July 2021 (2021-07-01) * abstract * * figures 1-6 * * paragraph [0006] – paragraph [0014] * * paragraph [0017] – paragraph [0027] * ----- | 1-15 | |
| | | | TECHNICAL FIELDS SEARCHED (IPC) H04M |

The present search report has been drawn up for all claims

| Place of search | Date of completion of the search | Examiner |
|---|---|---|
| The Hague | 16 June 2023 | Molinari, Fausto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 404 545 A1

## ANNEX TO THE EUROPEAN SEARCH REPORT
## ON EUROPEAN PATENT APPLICATION NO.

EP 23 30 5073

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| WO 2019144260 | A1 | 01-08-2019 | CN | 111742538 A | 02-10-2020 |
| | | | US | 2021366262 A1 | 25-11-2021 |
| | | | WO | 2019144260 A1 | 01-08-2019 |
| US 2021203295 | A1 | 01-07-2021 | AU | 2020417731 A1 | 28-07-2022 |
| | | | CA | 3161269 A1 | 08-07-2021 |
| | | | CN | 114902560 A | 12-08-2022 |
| | | | CO | 2022010608 A2 | 19-08-2022 |
| | | | EP | 4085528 A1 | 09-11-2022 |
| | | | KR | 20220120584 A | 30-08-2022 |
| | | | US | 2021203295 A1 | 01-07-2021 |
| | | | US | 2022182029 A1 | 09-06-2022 |
| | | | WO | 2021138102 A1 | 08-07-2021 |

EPO FORM P0459

For more details about this annex : see Official Journal of the European Patent Office, No. 12/82

**REFERENCES CITED IN THE DESCRIPTION**

**Patent documents cited in the description**

- US 10714119 B